(19) Europäisches Patentamt
European Patent Office
Office européen des brevets

(11) Numéro de publication: **0 026 502**
**B1**

# (12) FASCICULE DE BREVET EUROPEEN

(45) Date de publication du fascicule du brevet: **29.12.82**

(21) Numéro de dépôt: **80200747.6**

(22) Date de dépôt: **06.08.80**

(51) Int. Cl.³: **C 01 G 49/00,** C 01 G 39/00, C 22 B 3/00

(54) **Procédé pour traiter une phase organique contenant du chlorure de fer, du chlorure de molybdène et du HCl.**

(30) Priorité: **13.08.79 LU 81600**

(43) Date de publication de la demande:
**08.04.81 Bulletin 81/14**

(45) Mention de la délivrance du brevet:
**29.12.82 Bulletin 82/52**

(84) Etats contractants désignés:
**DE FR GB IT**

(56) Documents cités:
**DE - A - 1 592 255**
**DE - A - 2 232 460**
**DE - A - 2 315 849**
**DE - B - 2 062 627**
**FR - A - 2 327 199**
**FR - A - 2 396 573**
**GB - A - 1 428 278**
**US - A - 3 832 165**

**NEUE HÜTTE, vol. 21, No. 9, septembre 1976 pages 547 à 551**

(73) Titulaire: **METALLURGIE HOBOKEN-OVERPELT Société anonyme dite:**
**8, rue Montagne du Parc**
**B-1000 Bruxelles (BE)**

(72) Inventeur: **De Schepper, Achille**
**Berkenlaan 8**
**B-2451 Lichtaart (BE)**
Inventeur: **Coussement, Marc**
**Magdalena Vermeerschlaan 18**
**B-2540 Hove (BE)**

(74) Mandataire: **Saelemaekers, Juul et al,**
**METALLURGIE HOBOKEN-OVERPELT A.**
**Greinerstraat 14**
**B-2710 Hoboken (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 026 502 B1

# Procédé pour traiter une phase organique contenant du chlorure de fer, du chlorure de molybdène et du HCl

La présente invention se rapporte à un procédé pour traiter une phase organique contenant du chlorure de fer, du chlorure de molybdène et du HCl, en vue d'obtenir une solution aqueuse de chlorure de fer et de chlorure de molybdène, cette phase organique ayant été obtenue en extrayant du fer trivalent et du molybdène hexavalent d'une solution aqueuse acide de chlorures à l'aide d'un liquide organique contenant

un agent d'extraction constitué d'un composé organophosphorique choisi parmi

— les esters de l'acide phosphorique de formule

$$\begin{array}{c} OR_1 \\ | \\ R_2O-P{=}O \\ | \\ OR_3 \end{array} \qquad (I),$$

— les esters de l'acide phosphonique de formule

$$\begin{array}{c} O \\ \| \\ R_1-P(OR_2)-OR_3 \end{array} \qquad (II),$$

— les esters de l'acide phosphoneux de formule

$$R_1-P(OR_2)-OR_3 \qquad (III),$$

— les esters de l'acide phosphinique de formule

$$\begin{array}{c} O \\ \| \\ R_1-P(R_2)-OR_3 \end{array} \qquad (IV), \text{ et}$$

— les esters de l'acide phosphineux de formule

$$R_1-P(R_2)-OR_3 \qquad (V),$$

dans lesquelles $R_1$, $R_2$ et $R_3$ représentent chacun un groupe d'hydrocarbure substitué ou non substitué, égal ou différent, et

un agent empêchant la formation d'émulsion constitué d'un alcool aliphatique contenant de 8 à 16 atomes de carbone.

Dans un tel procédé il importe de traiter la phase organique de façon que d'une part sa teneur finale en fer et en molybdène soit faible pour qu'elle puisse être réutilisée dans les meilleures conditions pour l'extraction de nouvelles quantités de fer trivalent et de molybdène hexavalent et que d'autre part la solution aqueuse obtenue ait une teneur aussi élevée que possible en fer et en molybdène pour que son traitement ultérieur, qui peut comprendre une pyrohydrolyse, puisse se dérouler dans les conditions les plus économiques. En d'autres termes, il importe de pouvoir mettre en oeuvre une quantité de ré-extractant aussi faible que possible et d'obtenir en même temps un rendement de ré-extraction élevé pour le fer et le molybdène.

Un procédé du genre ci-dessus est décrit dans l'exemple 4 de la demande de brevet européen intitulée "Procédé pour séparer du fer trivalent d'une solution aqueuse de chlorures", déposée au même jour que la présente demande par la Demanderesse de la présente demande et publiée sous le numéro A 1—24 063. Selon cet exemple 4, on lave d'abord la phase organique avec une faible quantité d'eau de façon à produire une eau de lavage très acide et on met ensuite la phase organique lavée en contact avec de l'eau de façon à en ré-extraire la majeure partie du fer et du molybdène et à produire un seul éluat aqueux concentré. On obtient ainsi un bon rendement de ré-extraction du fer, mais un rendement de ré-extraction relativement faible pour le molybdène.

Le but de la présente invention est de fournir un procédé du genre ci-dessus qui permet d'obtenir un rendement de ré-extraction élevé aussi bien pour le molybdène que pour le fer, tout en assurant la production d'un éluat concentré.

A cet effet, le procédé de la présente invention comprend les étapes suivantes:

(a) on met la phase organique en contact avec une quantité d'eau ou d'eau acidulée telle que l'on ré-extrait la majeure partie du fer et seulement une partie mineure du molybdène contenus dans la phase organique en produisant ainsi un premier éluat aqueux et une phase organique partiellement déchargée;

(b) on sépare le premier éluat aqueux de la phase organique partiellement déchargée;

(c) on met la phase organique partiellement déchargée, en contact avec une quantité d'eau ou d'eau acidulée telle que l'on ré-extrait la majeure partie du molybdène contenu dans la phase organique partiellement déchargée en ré-extrayant ainsi également la majeure partie du fer contenu dans la phase organique partiellement déchargée et en produisant ainsi une second éluat aqueux et une phase organique régénérée; et

(d) on sépare le second éluat aqueux de la phase organique régénérée.

On utilise donc en tant que ré-extractant, de l'eau ou de l'eau acidulée, c'est-à-dire de l'eau à faible teneur en acide, de préférence en acide chlorhydrique. L'acidité du ré-extractant est avantageusement juste suffisante pour empêcher l'hydrolyse du chlorure de fer. Le plus souvent, on peut utiliser un ré-extractant dont le pH est compris entre 0,8 et 7.

Avantageusement, on ré-extrait dans l'étape (a) une quantité de fer et une quantité de molybdène telles que la phase organique partiellement déchargée y obtenue puisse être traitée dans l'étape (c) avec un minimum de ré-extractant. Ces quantités optimales dépendent de la composition de la phase organique à traiter et peuvent être facilement déterminées par voie expérimentale pour chaque cas particulier. Le plus souvent, ces quantités optimales seront ré-extraites, lorsqu'on utilise une quantité de ré-extractant telle que la teneur en ions $Cl^-$ du premier éluat soit comprise entre 65 et 75 g/l.

La quantité de molybdène à ré-extraire dans l'étape (c) dépend évidemment de la destination de la phase organique régénérée. Si on désire utiliser celle-ci ultérieurement pour extraire en substance la totalité du molybdène hexavalent présent dans une solution aqueuse impure, sa teneur résiduelle en molybdène doit être très faible. Par contre, si on ne vise qu'une extraction partielle du dit molybdène, la teneur résiduelle en molybdène de la phase organique régénérée peut être relativement élevée. Le plus souvent, une quantité appropriée de molybdène est ré-extraite dans l'étape (c) lorsqu'on y utilise une quantité de ré-extractant telle que la teneur en ions $Cl^-$ du second éluat soit comprise entre 47 et 57 g/l.

Avant d'effectuer l'étape (a), il est utile de laver la phase organique avec une faible quantité d'eau, ce qui permet d'obtenir dans l'étape (a) un éluat plus pur et moins acide. Cette quantité d'eau doit être suffisamment faible pour que l'eau de lavage obtenue contienne au moins 105 g/l d'ions $Cl^-$ et au moins 18 g/l de HCl.

En tant que composé de formule (I), on peut utiliser les esters de l'acide phosphorique décrits et mentionnés à la colonne 4, lignes 17—38, du document US—A—3 832 165.

En tant que composé de formule (II), on peut utiliser les esters de l'acide phosphonique décrits et mentionnés dans les documents DE—A—2 232 460 et GB—A—1 428 278.

En tant que composé de formule (IV), on peut utiliser les esters de l'acide phosphinique décrits et mentionnés dans le document DE—A—2 315 849 et le document GB—A—2 428 278 susdit.

La phase organique à traiter selon le procédé de la présente invention, peut contenir en tant qu'alcool aliphatique contenant 8 à 16 atomes de carbone, de l'isodécanol, auquel on donne la préférence, et les alcools mentionnés à la colonne 6, lignes 23—27 du document US—A—3 832 165 susdit.

La phase organique à traiter peut contenir également un diluant inerte, de préférence un diluant à caractère aliphatique tel le kérosène.

Par le procédé de la présente invention on peut traiter une phase organique ayant une teneur quelconque en alcool aliphatique. Cette teneur peut, par exemple, être juste suffisante pour empêcher la formation d'une émulsion ou elle peut être beaucoup plus élevée comme proposé dans la demande de brevet européen susdite.

L'exemple suivant fera mieux comprendre le procédé de l'invention et ses avantages.

Cet exemple concerne la ré-extraction selon le procédé de la présente invention, du fer et du molybdène d'une phase organique pratiquement identique à la phase organique lavée obtenue dans l'exemple 4 de la demande de brevet européen susdite.

Cette phase organique est constituée de 20% en volume de phosphate de tributyle (PTB), de 50% en volume d'isodécanol et de 30% en volume de kérosène, et elle contient en g/l : 15,84 $Fe^{3+}$, 0,131 $Mo^{6+}$, 0,005 $V^{4+}$, 0,176 Mn, 9,62 HCl.

Dans un premier stade de ré-extraction, on ré-extrait la majeure partie du fer et une partie mineure du molybdène contenus dans cette phase organique, en traitant celle-ci avec de l'eau en contre-courant, en 4 étages et avec un rapport volumétrique entre la phase organique et la phase aqueuse égal à 6,25.

On obtient ainsi une phase organique partiellement déchargée et un premier éluat contenant en g/l : 85,588 $Fe^{3+}$, 0,188 $Mo^{6+}$, 0,028 $V^{4+}$, 0,878 Mn, 43,45 HCl.

Dans un second stade de ré-extraction, on ré-extrait pratiquement le restant du molybdène et du fer contenus dans la phase organique partiellement déchargée, en traitant celle-ci avec de l'eau en contre-courant, en 4 étages et avec un rapport volumétrique entre la phase organique et la phase aqueuse égal à 14,3.

On obtient ainsi une phase organique régénérée et un second éluat contenant en g/l : 28,211 $Fe^{3+}$, 1,401 $Mo^{6+}$, 0,0019 $V^{4+}$, 0,367 Mn, 20,99 HCl.

La phase organique régénérée contient en g/l : 0,18 $Fe^{3+}$, 0,003 $Mo^{6+}$, 0,0005 $V^{4+}$, 0,001 Mn, 1,20 HCl.

Le rendement global de ré-extraction du fer est de 98,8% et celui du molybdène de 97,7%. La quantité globale d'eau mise en oeuvre dans les deux stades de ré-extraction est de 0,23 litre par litre de phase organique.

Dans l'exemple 4 de la demande de brevet européen susdite, on soumet la phase organique lavée à une ré-extraction en un seul stade, qui consiste à traiter la phase organique avec de l'eau en contre-courant, en 6 étages et avec un rapport volumétrique entre la phase organique et la phase aqueuse égal à 5. On y utilise donc une quantité d'eau pratiquement égale à la quantité globale d'eau mise en oeuvre dans les deux stades de ré-extraction du présent exemple. On y obtient toutefois un rendement de ré-extraction du molybdène de seulement 62%.

**Revendications**

1. Procédé pour traiter une phase organique contenant du chlorure de fer, du chlorure de molybdène et du HCl en vue d'obtenir une solution aqueuse de chlorure de fer et de chlorure de molybdène, cette phase organique ayant été obtenue en extrayant du fer trivalent et du molybdène hexavalent d'une solution aqueuse acide de chlorures à l'aide d'un liquide organique contenant

un agent d'extraction constitué d'un composé organophosphorique choisi parmi

— les esters de l'acide phosphorique de formule

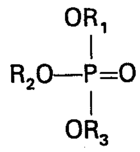
,

— les esters de l'acide phosphonique de formule

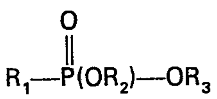
,

— les esters de l'acide phosphoneux de formule

$R_1—P(OR_2)—OR_3$ ,

— les esters de l'acide phosphinique de formule

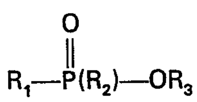
, et

— les esters de l'acide phosphineux de formule

$R_1—P(R_2)—OR_3$ ,

dans lesquelles $R_1$, $R_2$ et $R_3$ représentent chacun un groupe d'hydrocarbure substitué ou non substitué, égal ou différent, et

un agent empêchant la formation d'émulsion constitué d'un alcool aliphatique contenant de 8 à 16 atomes de carbone,

ce procédé étant caractérisé en ce qu'il comprend les étapes suivantes:

(a) on met la phase organique en contact avec une quantité d'eau ou d'eau acidulée telle que l'on ré-extrait la majeure partie du fer et seulement une partie mineure du molybdène contenus dans la phase organique en produisant ainsi un premier éluat aqueux et une phase organique partiellement déchargée;

(b) on sépare le premier éluat aqueux de la phase organique partiellement déchargée;

(c) on met la phase organique partiellement déchargée, en contact avec une quantité d'eau ou d'eau acidulée telle que l'on ré-extrait la majeure partie du molybdène contenu dans la phase organique partiellement déchargée en ré-extrayant ainsi également la majeure partie du fer contenu dans la phase organique partiellement déchargée et en produisant ainsi un second éluat aqueux et une phase organique régénérée; et

(d) on sépare le second éluat aqueux de la phase organique régénérée.

2. Procédé selon la revendication 1, caractérisé en ce qu'on utilise dans l'étape (a) une quantité de ré-extractant telle que la teneur en ions $Cl^-$ du premier éluat soit comprise entre 65 et 75 g/l.

3. Procédé selon la revendication 1 ou 2, caractérisé en ce qu'on utilise dans l'étape (c) une quantité de ré-extractant telle que la teneur en ions $Cl^-$ du second éluat soit comprise entre 47 et 57 g/l.

4. Procédé selon la revendication 1, 2 ou 3, caractérisé en ce qu'avant d'effectuer l'étape (a), on lave la phase organique avec une quantité d'eau suffisamment faible pour que l'eau de lavage obtenue contienne au moins 105 g/l d'ion $Cl^-$ et au moins 18 g/l de HCl.

5. Procédé selon l'une quelconque des revendications précédentes, caractérisé en ce que la phase organique contient du phosphate de tributyle en tant que composé organophosphorique.

6. Procédé selon l'une quelconque des revendications précédentes, caractérisé en ce que la phase organique contient de l'isodécanol en tant qu'alcool aliphatique.

7. Procédé selon l'une quelconque des revendications précédentes, caractérisé en ce que la phase organique contient un diluant inerte.

8. Procédé selon la revendication 7, caractérisé en ce que la phase organique contient du kérosène en tant que diluant inerte.

## Claims

1. A process for treating an organic phase containing iron chloride, molybdenum chloride and HCl in order to obtain an aqueous solution of iron chloride and molybdenum chloride, this organic phase having been obtained by extracting trivalent iron and hexavalent molybdenum from an aqueous acid chloride solution with an organic liquid containing

an extraction agent consisting of an organophosphoric compound chosen among

— the phosphoric acid esters with the formula

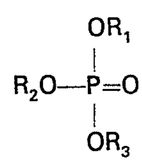
,

— the phosphonic acid esters with the formula

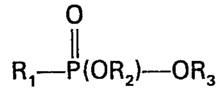
,

— the phosphonous acid esters with the formula

$$R_1—P(OR_2)—OR_3 \quad ,$$

— the phosphinic acid esters with the formula

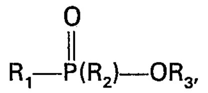 and

— the phosphinous acid esters with the formula

$$R_1—P(R_2)—OR_3 \quad ,$$

in which $R_1$, $R_2$ and $R_3$ represent the same or different, unsubstituted or substituted hydrocarbon groups, and

an agent to prevent emulsion formation consisting of an aliphatic alcohol containing 8 to 16 carbon atoms,

this process being characterized in that it comprises following steps:

(a) contacting the organic phase with such a quantity of water or acidulated water that most of the iron and only a minor part of the molybdenum contained in the organic phase are re-extracted, thereby producing a first aqueous eluate and a partially unloaded organic phase;

(b) separating the first aqueous eluate from the partially unloaded organic phase;

(c) contacting the partially unloaded organic phase with such a quantity of water or acidulated water that most of the molybdenum contained in the partially unloaded organic phase is re-extracted, thereby re-extracting also most of the iron contained in the partially unloaded organic phase and producing a second aqueous eluate and a regenerated organic phase; and

(d) separating the second aqueous eluate from the regenerated organic phase.

2. A process according to claim 1, characterized in that in step (a) a quantity of re-extracting agent is used such that the $Cl^-$ ion content of the first eluate ranges between 65 and 75 g/l.

3. A process according to claim 1 or 2, characterized in that in step (c) a quantity of re-extracting agent is used such that the $Cl^-$ ion content of the second eluate ranges between 47 and 57 g/l.

4. A process according to claim 1, 2 or 3, characterized in that prior to step (a), the organic phase is washed with such a small quantity of water that the obtained wash-water contains at least 105 g/l of $Cl^-$ ions and at least 18 g/l of HCl.

5. A process according to any of the preceding claims, characterized in that the organic phase contains tributyl phosphate as an organophosphoric compound.

6. A process according to any of the preceding claims, characterized in that the organic phase contains isodecanol as an aliphatic alcohol.

7. A process according to any of the preceding claims, characterized in that the organic phase contains an inert diluent.

8. A process according to claim 7, characterized in that the organic phase contains kerosene as an inert diluent.

**Patentansprüche**

1. Verfahren zur Behandlung einer organischen Phase, die Eisenchlorid, Molybdänchlorid und HCl enthält, zum Zwecke der Gewinnung einer wäßrigen Lösung von Eisenchlorid und Molybdänchlorid, wobei diese organische Phase hergestellt war durch Extraktion des dreiwertigen Eisens und des sechswertigen Molybdäns aus einer wäßrigen, sauren Chloridlösung mittels einer organischen Flüssigkeit, die als Extraktionsmittel eine der folgenden Organophosphorverbindungen enthielt:

Ester der Phosphorsäure mit der Formel

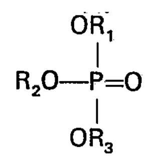 ,

Ester der Phosphonsäure mit der Formel

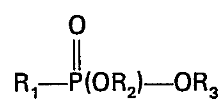 ,

Ester der phosphonigen Säure mit der Formel

$$R_1—P(OR_2)—OR_3 \quad ,$$

Ester der Phosphinsäure mit der Formel

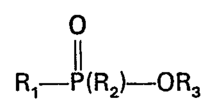 ,

Ester der phosphinigen Säure mit der Formel

$$R_1—P(R_2)—OR_3 \quad ,$$

worin

$R_1$, $R_2$ und $R_3$ substituierte oder nicht substituierte, gleiche oder verschiedene Kohlenwasserstoffgruppen sind und die organische Phase als Mittel zur Verhinderung der Emulsionsbildung einen aliphatischen Alkohol mit 8 bis 16 Kohlenstoffatomen enthielt, dadurch gekennzeichnet, daß das Verfahren in folgenden Stufen durchgeführt wird:

a) man bringt die organische Phase mit einer solchen Menge Wasser oder angesäuertem Wasser in Berührung, daß der überwiegende Teil des Eisens und nur ein geringer Teil des Molybdäns reextrahiert wird, wobei man einen

ersten wäßrigen Auszug und eine teilweise entleerte organische Phase enthält;

b) man trennt den ersten wäßrigen Auszug von der teilweise entleerten organischen Phase;

c) man bringt die teilweise entleerte organische Phase mit einer solchen Menge Wasser oder angesäuertem Wasser in Berührung, daß der größte Teil des Molybdäns reextrahiert wird, wobei ebenfalls der größte Teil des noch in dieser Phase enthaltenen Eisens reextrahiert wird, so daß man einen zweiten, wäßrigen Auszug und eine regenerierte organische Phase erhält;

d) man trennt den zweiten wäßrigen Auszug von der regenerierten organischen Phase.

2. Verfahren nach Anspruch 1, dadurch gekennzeichnet, daß man in der Stufe a) eine solche Menge Reextraktionsmittel anwendet, daß der Gehalt an $Cl^-$-Ionen im ersten Auszug 65 bis 75 g/l beträgt.

3. Verfahren nach Anspruch 1 oder 2, dadurch gekennzeichnet, daß man in der Stufe c) eine solche Menge Reextraktionsmittel anwendet, daß der Gehalt an $Cl^-$-Ionen im zweiten Auszug 47 bis 57 g/l beträgt.

4. Verfahren nach Anspruch 1, 2 oder 3, dadurch gekennzeichnet, daß man vor Ausführung der Stufe a) die organische Phase mit einer so geringen Menge Wasser wäscht, daß das erhaltene Waschwasser mindestens 105 g/l $Cl^-$-Ionen und mindestens 18 g/l HCl enthält.

5. Verfahren nach einem der vorhergehenden Ansprüche, dadurch gekennzeichnet, daß man eine organische Phase verwendet, die Tributylphosphat als Organophosphorverbindung enthält.

6. Verfahren nach einem der vorhergehenden Ansprüche, dadurch gekennzeichnet, daß man eine organische Phase verwendet, die Isodekanol als aliphatischen Alkohol enthält.

7. Verfahren nach einem der vorhergehenden Ansprüche, dadurch gekennzeichnet, daß man eine organische Phase verwendet, die ein inertes Verdünnungsmittel enthält.

8. Verfahren nach Anspruch 7, dadurch gekennzeichnet, daß man in der organischen Phase Kerosin als inertes Verdünnungsmittel verwendet.